# EUROPÄISCHE PATENTANMELDUNG

(11) **EP 4 325 186 A1**
(43) Veröffentlichungstag der Anmeldung: **21.02.2024**
(21) Anmeldenummer: 23192059.6
(22) Anmeldetag: 18.08.2023
(51) Int. Cl.: G01J 3/28, G01J 3/46, H05B 45/20, H05B 47/11, H05B 47/19, G01J 1/42

(54) **VORRICHTUNG UND VERFAHREN ZUM BESTIMMEN DER LICHTTECHNISCHEN CHARAKTERISTIK EINER LEUCHTE**

(30) Priorität: 19.08.2022 DE 102022120995
(71) Anmelder: PSLab Holding Ltd, London W1G 0PW (GB)
(72) Erfinder: Saddi, Dimitri, London W1G 0PW (GB)
(74) Vertreter: Eisenführ Speiser

(57) **Zusammenfassung**

Die vorliegende Erfindung betrifft eine Vorrichtung zum Bestimmen der lichttechnischen Charakteristik einer Leuchte, mit einer Kamera zum Erfassen eines von der Leuchte erzeugten Wandbilds auf einer Wand und Bereitstellen eines auf dem erfassten Wandbild beruhenden Kamerabilds, und einer Bildauswerteeinrichtung zum Auswerten des Kamerabilds, wobei die Bildauswerteeinrichtung ein Entzerrungsmodul zum Entzerren des Kamerabilds, ein Beleuchtungsstärke- und/oder Farb- und/oder Spektralverteilungsmodul zum Bestimmen einer Beleuchtungsstärke- und/oder Farb- und/oder Spektralverteilung in dem entzerrten Kamerabild, und ein Lichtstärke- und/oder Farbort- und/oder Strahlstärkeverteilungsmodul zum Bestimmen der Lichtstärkeverteilung und/oder winkelabhängigen Farbortverteilung und/oder spektralen Strahlstärkeverteilung der Leuchte aus der zuvor bestimmen Beleuchtungsstärke- und/oder Farb- und/oder Spektralverteilung aufweist.

## Beschreibung

Die vorliegende Erfindung betrifft eine Vorrichtung sowie ein Verfahren zum Bestimmen der lichttechnischen Charakteristik einer Leuchte, wobei mittels einer Kamera ein von der Leuchte erzeugtes Wandbild auf einer Wand erfasst und ein auf dem erfassten Wandbild beruhendes Kamerabild bereitgestellt wird und mittels einer Bildauswerteeinrichtung das Kamerabild ausgewertet wird, um die lichttechnische Charakteristik der Leuchte zu bestimmen. Die Erfindung betrifft ferner auch eine Vorrichtung sowie ein Verfahren zum Visualisieren der auf diese Art bestimmten lichttechnischen Charakteristik der Leuchte.

Für hochwertige Beleuchtungsaufgaben werden heutzutage Leuchten mit präzise definierten lichttechnischen Charakteristika verlangt, um ein bestimmtes Objekt, eine Gebäudefläche oder allgemein das Zielgebiet in der gewünschten Weise auszuleuchten. Anwender wie Architekten, aber auch Leuchtenentwickler und Lichtdesigner verlangen dabei nicht nur bestimmte Farbtemperaturen oder Leuchtstärken bzw. Lichtströme, sondern präzise Angaben zu den Beleuchtungsstärken auf dem beleuchteten Objekt bzw. Zielgebiet, die Lichtstärkeverteilung und/oder winkelabhängige Farbortverteilung und/oder spektrale Strahlstärkeverteilung der Leuchte, Verlauf der Isoluxen, biologische Lichtwirkungen auf den menschlichen Organismus und dergleichen, und verlangen hierzu präzise Nachweise. Dabei sollen die lichttechnischen Charakteristika nicht nur abstrakt vom Leuchtenhersteller bereitgestellt werden, sondern vor Ort in verschiedenen Einbauumgebungen nachgemessen werden können, wobei Anwender wie Architekten oder auch Lichtdesigner bzw. Entwickler und Hersteller auch eine Visualisierung in der jeweiligen Einbauumgebung der Leuchte und ggf. auch Soll-/Ist-Vergleiche zu den lichttechnischen Charakteristika sowie Inline-Kontrollen wünschen.

Bislang werden die lichttechnischen Charakteristika einer Leuchte häufig vom Leuchtenhersteller durch Vermessen und Berechnen bestimmt, beispielsweise mit Hilfe von Leuchtdichtemesskameras, relativ zu denen die Leuchte verkippt oder per Spiegel der Lichtkegel verkippt wird, um die Leuchtdichte abzurastern. In ähnlicher Weise sind auch indirekte Messungen der Lichtstärkeverteilungen bekannt, beispielsweise durch Goniophotometer, bei denen beispielsweise über hochwertige Abbildungssysteme beispielsweise umfassend Fresnellinsen der Lichtkegel auf eine Messwand geworfen wird, an der dann die Leuchtdichte abgerastert wird.

Hiervon ausgehend liegt der vorliegenden Erfindung die Aufgabe zugrunde, verbesserte Vorrichtungen und Verfahren der eingangs genannten Art zu schaffen, die Nachteile des Standes der Technik vermeiden und Letzteren in vorteilhafter Weise weiterbilden. Insbesondere soll eine einfache und präzise Bestimmung von lichttechnischen Charakteristika einer Leuchte in verschiedenen Einbauumgebungen mit variablen Montagepositionen der Leuchte und der Messeinrichtung ermöglicht werden.

Erfindungsgemäß wird die genannte Aufgabe durch eine Vorrichtung gemäß Anspruch 1 sowie ein Verfahren gemäß Anspruch 15 gelöst. Bevorzugte Ausgestaltungen der Erfindung sind Gegenstand der abhängigen Ansprüche.

Es wird also vorgeschlagen, die lichttechnische Charakteristik der Leuchte über den Umweg eines Kamerabilds zu bestimmen, welches von einem Zielbereich der Leuchte auf einer vorzugsweise ebenen, ggf. aber auch gekrümmten Wand, die von der Leuchte bestrahlt wird, aufgenommen und sodann ausgewertet wird. Dabei wird bei der Auswertung so vorgegangen, dass die Montageposition der Leuchte relativ zur Wand variiert werden kann und von der Auswertung kompensiert bzw. berücksichtigt wird.

Erfindungsgemäß wird aus dem von der Kamera bereitgestellten Kamerabild, das das von der Leuchte erzeugte Wandbild auf der Wand wiedergibt, von einem Entzerrungsmodul ein entzerrtes Kamerabild berechnet. Aus dem entzerrten Kamerabild werden sodann von einem Beleuchtungsstärke- und/oder Farb- und/oder Spektralverteilungsmodul relative Beleuchtungsstärken und/oder Farbwerte und/oder Spektralverteilungen in verschiedenen Bildpunkten und/oder -bereichen des entzerrten Kamerabilds berechnet und eine darauf beruhenden bzw. entsprechende Beleuchtungsstärke- und/oder Farb- und/oder Spektralverteilung bereitgestellt. Ein Lichtstärke- und/oder Farbort- und/oder Strahlstärkeverteilungsmodul bestimmt schließlich aus der zuvor im entzerrten Kamerabild bestimmten Beleuchtungsstärke- und/oder Farb- und/oder Spektralverteilung die Lichtstärkeverteilung bzw. Lichtstärkeverteilungskurve LVK und/oder die winkelabhängige Farbort-Verteilung RGB und/oder die spektrale Strahlstärkeverteilung der Leuchte und/oder deren Fernfeldverteilung und/oder Winkelverteilung bezüglich Lichtstärke, Farbort und/oder spektraler Strahlstärke.

Durch die Entzerrung des Kamerabilds können Verzerrungseffekte, die vom Objektiv der Kamera herrühren oder auch durch eine Krümmung der Wand bedingt sein können, korrigiert werden, wodurch es grundsätzlich möglich ist, die Leuchte in verschiedenen Positionen auf die jeweilige Einbauumgebung abgestimmt zu montieren und dennoch eine korrekte Bestimmung der lichttechnischen Charakteristik zu erhalten. Solche Verzerrungseffekte sind beispielsweise anschaulich bekannt bei sogenannten Fish-Eye-Objektiven, die vertikale und horizontale Linien mehr oder minder bogenförmig verkrümmen.

Um solche Verzerrungseffekte zu korrigieren, kann das Entzerrungsmodul eine Identifiziereinrichtung zum Identifizieren von Schlüsselkonturen im Kamerabild aufweisen, die im Wandbild, welches von der Kamera aufgenommen wird, gerade Konturen und/oder rechte Winkel sein können. Mithilfe eines Berechnungsmoduls kann die Krümmungs- und/oder Winkelabweichung zwischen der im Kamerabild identifizierten Schlüsselkontur und der im Wandbild tatsächlich vorhandenen, insbesondere geraden oder rechtwinkligen Schlüsselkontur bestimmt werden, um dann auf Basis der bestimmten Krümmungs- und/oder Winkelabweichung ein entzerrtes Kamerabild bereitzustellen, welches sozusagen ein manipuliertes Kamerabild oder virtuelles Bild ist, das zwar auf dem von der Kamera geschossenen Kamerabild beruht, jedoch die dabei aufgetretenen, verkrümmten und/oder im Winkel verzogenen Konturen wieder zurechtzieht.

Als Schlüsselkontur kann dabei beispielsweise auf der Wand eine Markierung mit vorbestimmtem Konturverlauf, beispielsweise eine oder mehrere horizontale Linien und/oder eine oder mehrere vertikale Linien vorgegeben werden. Dies kann beispielsweise durch eine tatsächlich aufgebrachte Markierung auf der Wand erfolgen, oder auch durch eine bildgebende Optik oder auch mittels eines Lasers auf die Wand projiziert werden, beispielsweise in Form eines Gittermusters oder eines Schachbrettmusters, wobei es vorteilhaft sein kann, die bildgebende Apparatur beispielsweise umfassend einen Beamer in der Nähe bzw. der unmittelbaren Nachbarschaft der Leuchte und/oder der Kamera zu positionieren, um ähnliche optische Verhältnisse zu haben. In dem von der Kamera aufgenommenen Kamerabild werden die genannten Markierungen im Wandbild beispielsweise mittels einer Konturerkennungseinrichtung erkannt und identifiziert, woraufhin dann der Konturverlauf im Kamerabild mit dem bekannten Konturverlauf der Markierung auf der Wand abgeglichen werden kann, um dann auf Basis der berechneten Kontur- und/oder Winkelabweichungen das Kamerabild zu manipulieren und hierdurch zu entzerren.

Das entzerrte Kamerabild wird sodann hinsichtlich der im entzerrten Bild auftretenden Beleuchtungsstärken und/oder Farbwerte und/oder Spektralverteilung ausgewertet, wobei hier zunächst relative Luxzahlen und/oder relative Farbortunterschiede und/oder relative Spektrumsunterschiede bestimmt werden können. Genauer gesagt kann bestimmt werden, in welchen Bereichen wie viele Lux mehr oder weniger und/oder um wieviel höhere/niedriegere Farbtemperaturen bzw. in welcher Weise abweichende Farborte als in anderen Bereichen auftreten und/oder in welchen Orten welche spektralen Abweichungen auftreten, wobei hier zunächst noch keine absoluten Luxzahlen bzw. keine absoluten Farbwerte bzw. keine absoluten Farbort-Koordinaten oder absolute Spektralverteilungen bestimmt werden.

Soweit ggf. nicht nur Beleuchtungsstärken, sondern auch Farben erfaßt und analysiert werden, um die winkelabhängige Farbort-Verteilung der Leuchte zu bestimmen, ist anzumerken, dass zur präzisen Definition bzw. eindeutigen Identifizierung einer Farbe an sich üblicherweise der "Farbort" angegeben bzw. identifiziert wird, wobei dieser Farbort in per se bekannter Weise auf ein Farbdiagramm Bezug nimmt und die XY-Koordinaten eines solchen Farbdiagramms meint. In einem solchen Farbdiagramm ist die "Farbtemperatur" zwar enthalten, bezeichnet dort aber nur einen kleineren Bereich. Der Term "Farbtemperatur" bezeichnet dabei die Farbe eines perfekten schwarzen Körpers, der die angegebene Temperatur hat und dazu korrespondierend in einer entsprechenden Farbe leuchtet. Um die jeweilige Farbe genauer spezifizieren zu können, ist man dazu übergegangen, in einem Farbdiagramm den Farbort zu identifizieren.

Soweit auf der Wand bzw. im Kamerabild für verschiedene Orte bzw. Bereiche ggf. auch die Spektralverteilung bestimmt und hieraus die spektrale Strahlstärkeverteilung der Leuchte bestimmt wird, ist anzumerken, dass an sich aus der Spektralverteilung auch die Farbverteilung und auch die Beleuchtungsstärkeverteilung berechnet werden kann, da die Spektralverteilung diese Informationen beinhaltet bzw. die genannten Informationen sich daraus errechnen lassen. Je nachdem, mit welcher Sensorik gearbeitet wird, ist es also möglich, die Beleuchtungsstärken bzw. die Farborte aus der erfassten Spektralverteilung zu bestimmen oder eben in anderer Weise direkt sensorisch zu erfassen.

Aus der genannten Spektralverteilung können grundsätzlich auch noch andere Informationen gewonnen werden, beispielsweise die biologischen Auswirkungen des entsprechend charakterisierten Lichts auf den Menschen im Sinne von beispielsweise Melatonin- oder Serotonin-Ausschüttungswirkung, sodass eine Leuchte durch die spektrale Strahlstärkeverteilung auch hinsichtlich ihrer biologischen Wirkungen charakterisiert werden kann.

Je nachdem, welche Größe erfasst wird, kann mit verschiedenen Sensortypen gearbeitet werden. Beispielsweise kann die Farbverteilung auf der Wand mittels eines RGB-Sensors einer Kamera bestimmt werden. Soll die Spektralverteilung bestimmt werden, kann mit einer Hyperspektralkamera gearbeitet werden. Soll andererseits nur oder zusätzlich die Beleuchtungsstärke bestimmt werden, kann mit einem Beleuchtungsstärkesensor gearbeitet werden.

Insbesondere kann das genannte Beleuchtungsstärke- und/oder Farb- und/oder Spektralverteilungsmodul eine Vergleichseinrichtung zum Vergleichen der Beleuchtungsstärken und/oder Farbtemperaturen bzw. Farborte in verschiedenen Bildpunkten und/oder -bereichen des entzerrten Kamerabilds relativ zueinander aufweisen, um im entzerrten Kamerabild eine relative Beleuchtungsstärke- und/oder Farbverteilung zu bestimmen. Alternativ oder zusätzlich kann die genannte Vergleichseinrichtung auch dazu ausgebildet sein, Spektralverteilungen in verschiedenen Bildpunkten und/oder -bereichen des entzerrten Kamerabilds relativ zueinander zu vergleichen und relative Spektralverteilungsabweichungen zu bestimmen.

Um zu absoluten Beleuchtungsstärken und einer absoluten Farbort- und/oder Spektralverteilung zu kommen, kann das Beleuchtungsstärke- und/oder Farb- und/oder Spektralverteilungsmodul zusätzlich zu der genannten Vergleichseinrichtung eine Kalibriereinrichtung umfassen, mittels derer aus den zuvor bestimmten relativen Luxzahlen bzw. relativen Beleuchtungsstärken bzw. Farbwerten bzw. -orten, die die Vergleichseinrichtung bereitgestellt hat, die Beleuchtungsstärke- und/oder Farbverteilung mit absoluten Beleuchtungsstärkewerten bzw. Farborten bestimmt wird. In entsprechender Weise können mit Hilfe der Kalibriereinrichtung aus den relativen Spektralverteilungsabweichungen absolute Spektralverteilungen in den Bildpunkten bzw. -bereichen berechnet bzw. bestimmt werden.

Die Kalibriereinrichtung kann dabei grundsätzlich unterschiedlich ausgebildet sein bzw. unterschiedlich arbeiten. In Weiterbildung der Erfindung kann die Kalibriereinrichtung beispielsweise einen oder mehrere Beleuchtungsstärke- und/oder Farbwertsensoren bspw. in Form eines Spektrometers zum Messen der tatsächlichen Beleuchtungsstärke und/oder des tatsächlichen Spektrums, insbesondere im Sinne des genannten Farborts, in einem oder mehreren Bildpunkten und/oder -bereichen umfassen, wobei der genannte Beleuchtungsstärke- und/oder Farbwertsensor beispielsweise unmittelbar an der Wand angebracht oder auf die Wand gerichtet sein kann, auf der das Wandbild erzeugt wird. Alternativ oder zusätzlich zu einem Farbwert- bzw. RGB-Sensor kann auch mit einer Hyperspektralkamera gearbeitet werden, die mittels einer Sensormatrix pixelweise das Spektrum erfassen kann.

Ist in einem oder mehreren Bildpunkten bzw. -bereichen die tatsächliche Beleuchtungsstärke bzw. ein tatsächlicher Farbwert durch sensorische Erfassung bekannt, kann ein Kalibrierfaktor bzw. Beleuchtungsstärke- und/oder Farbwert-Korrekturfaktor bzw. eine Spektralverteilungs-Korrekturfunktion bestimmt werden, mithilfe dessen/derer dann die relativen Beleuchtungsstärken bzw. Farbwerte in tatsächliche, absolute Beleuchtungsstärken bzw. absolute Farbwerte wie z.B. Farbtemperaturen oder Farborte und/oder die Spektralverteilungs-Abweichungen in tatsächliche Spektralverteilungen umgerechnet werden können.

Alternativ oder zusätzlich zu einer solchen sensorischen Kalibrierung mittels eines Beleuchtungsstärke- bzw. Farbwertsensors oder einer Hyperspektralkamera kann auch eine rechnerische Bestimmung absoluter Beleuchtungsstärke und/oder Farbwerte aus relativen Beleuchtungsstärke und/oder Farbwerten erfolgen, und zwar insbesondere unter Zuhilfenahme bekannter oder zuvor bestimmter Charakteristika der bestrahlten Wand, insbesondere deren Reflexionsgrad und deren Lambertschen Abstrahlcharakteristik. Insbesondere kann anhand des Reflexionsgrads und/oder des Remissionsverhaltens und/oder der Lambertschen Abstrahlcharakteristik der Wand und der Leuchtdichte und/oder des Leuchtspektrums, die/das in einem Punkt und/oder in einem Flächenabschnitt bestimmt wird, eine Kalibrierung erfolgen und aus dem Kamerabild die absolute Lichtstärkeverteilung und/oder die winkelabhängige Farbort-Verteilung und/oder die spektrale Strahlstärkeverteilung der Leuchte bestimmt werden.

Alternativ oder zusätzlich kann die Kalibriereinrichtung auch eine bildgebende Beleuchtungseinrichtung zum Beleuchten der Wand mit einem vorbestimmten Hell-Dunkel- und/oder Farbwert-Muster, insbesondere einem vorbestimmten Schwarz-Weiß-Muster wie beispielsweise einem Schachbrett aufweisen, wobei die Vergleichseinrichtung des Beleuchtungsstärke- und/oder Farb- und/oder Spektralverteilungsmoduls dazu ausgebildet sein kann, in einem Kalibriervorgang die relativen Beleuchtungsstärkewerte für helle und dunkle Bildpunkte und/oder - bereiche des genannten, vorbestimmten Hell-Dunkel-Musters oder relative Farbtemperaturwerte für das Farbwertmuster zu bestimmen. Aus der Kenntnis der beispielsweise schwarzen und weißen Felder im Wandbild des Kalibrierdurchlaufs kann dann wiederum ein Kalibrierfaktor bzw. Beleuchtungsstärken- und/oder Farbwertumrechnungsfaktor bestimmt werden, mithilfe dessen dann das Beleuchtungsstärke- und/oder Farb- und/oder Spektralverteilungsmodul aus den relativen Beleuchtungsstärkewerten bzw. relative Farbwerten im entzerrten Kamerabild absolute Beleuchtungsstärke- und/oder Farbwerte bestimmen kann.

Die genannte Kalibriereinrichtung kann dabei alternativ oder zusätzlich auch dazu genutzt werden, die bildgebende Beleuchtungseinrichtung zu kalibrieren. Ist beispielsweise durch das Entzerrungsmodul der Verzerrungseffekt der Kamera bereits bestimmt, beispielsweise durch Anbringung von tatsächlich geraden Gitterlinien bzw. Gitterlinien bekannten Verlaufs auf der Wand, bzw. ist die Kamera bereits kalibriert, kann beispielsweise mit der bildgebenden Beleuchtungseinrichtung ein vorbestimmtes Hell-Dunkel-Muster beispielsweise in Form eines Gitterlinienmusters auf die Wand projiziert werden. Aus dem Kamerabild der bereits kalibrierten Kamera kann die Kalibriereinrichtung dann bestimmen, inwieweit das tatsächlich auf die Wand projizierte Gitterlinienmuster bzw. Hell-Dunkel-Muster der bildgebenden Beleuchtungseinrichtung verzerrt ist, woraus die Kalibriereinrichtung dann die Entzerrung der bildgebenden Beleuchtungseinrichtung bestimmen kann.

Alternativ oder zusätzlich ist es aber auch möglich, durch die Kalibriereinrichtung sowohl die Kamera als auch die bildgebende Beleuchtungseinrichtung zu kalibrieren. Hierzu kann beispielsweise mit einer Stereokamera bzw. mit zwei voneinander beabstandeten Kameras mit vorzugsweise parallelen, ggf. aber auch verschränkten "Blickachsen" ein von der bildgebenden Beleuchtungseinrichtung auf die Wand projiziertes Referenzmuster aufgenommen. Aus den bekannten oder zu bestimmenden Koordinaten der Kameraanordnung und der Anordnung der bildgebenden Beleuchtungseinrichtung kann die Kalibriereinrichtung dann mit Hilfe eines vorbestimmten mathematischen Modells beide Einheiten, d.h. die Kamera und die bildgebende Beleuchtungseinrichtung kalibrieren, indem die beiden von der Stereokamera bzw. den beabstandeten Kameras aufgenommenen Bilder miteinander abgeglichen werden.

Ist die Beleuchtungsstärke- und/oder Farb- und/oder Spektralverteilung für das entzerrte Kamerabild bestimmt, kann das Lichtstärke- und/oder Farbort- und/oder Strahlstärkeverteilungsmodul hieraus die Lichtstärke- und/oder winkelabhängige Farbort- und/oder spektrale Strahlstärkeverteilung der Leuchte bestimmen, wobei das genannte Lichtstärke- und/oder Farbort- und/oder Strahlstärkeverteilungsmodul insbesondere dazu ausgebildet sein kann, die Position der Leuchte relativ zur Wand und/oder die Geometrie des von der Leuchte beleuchteten Wandflächenabschnitts und dessen geometrische Beziehung zur Leuchte zu berücksichtigen.

Die Position und/oder geometrische Beziehung der Leuchte relativ zur Wand bzw. zum Wandbild kann beispielsweise über eine geeignete Eingabeschnittstelle der Vorrichtung manuell eingegeben werden und/oder von einer automatischen Positionsbestimmungseinrichtung erfasst und dem Lichtstärke- und/oder Farbort- und/oder Strahlstärkeverteilungsmodul über die genannte Eingabeschnittstelle bereitgestellt werden, beispielsweise in Form eines Koordinaten-Datensatzes, der die Position der Leuchte relativ zu dem Wandabschnitt angibt, den die Kamera als Kamerabild erfasst.

Die genannten Positionsdaten können dabei insbesondere den Abstand der Leuchte von der Wand und/oder einen Querversatz der Leuchte relativ zu dem Zentrum bzw. der Mitte zwischen zweier Wandbilder, welche erfasst werden, oder eines vorbestimmten Wandbildpunktes wie beispielsweise zweier gegenüberliegender Ecken, umfassen.

Der genannte Querversatz kann verschieden bestimmt sein, beispielsweise den radialen Abstand von einer Senkrechten auf das Wandbildzentrum und/oder den Horizontal- und Vertikalversatz hiervon, wenn die Wand senkrecht steht, oder den Nord-Süd- und/oder Ost-West-Versatz meinen, wenn das Wandbild auf eine Decke oder den Boden projiziert wird. Beispielsweise kann der Positionsdatensatz den Abstand der Leuchte senkrecht zur Wand und den Höhen- und Horizontalversatz der Leuchte gegenüber dem Zentrum des von der Leuchte erzeugten bzw. von der Kamera erfassten Wandbilds beinhalten.

Die genannten Positionsdaten können dabei sensorisch erfasst werden, beispielsweise durch Abstands- und/oder Lagesensoren.

Um die Kamerabild-Erfassung variabel an die jeweilige Einbauumgebung und den Komponentenaufbau anpassen zu können, kann ein vorbestimmter Auswertebereich an der Wand für das auszuwertende Kamerabild vorgegeben werden. Ein solcher Auswertebereich für das auszuwertende Kamerabild kann variabel definiert werden, insbesondere in Form eines Rechtecks, welches beispielsweise von der bestrahlten Wand definiert sein kann oder ein vorbestimmter Teilabschnitt der Wand sein kann, auf die der Lichtkegel der Leuchte geworfen wird.

Vorteilhafterweise kann ein Bereichswahlmodul den Auswertebereich variabel vorgeben, vorzugsweise hinsichtlich der Fläche bzw. Größe und/oder hinsichtlich des Formats, beispielsweise in Form eines hochformatigen Rechtecks oder eines querformatigen Rechtecks oder eines Quadrats. Soll beispielsweise ein Museumsstrahler oder eine OP-Leuchte hinsichtlich ihrer lichttechnischen Charakteristik vermessen bzw. bestimmt werden, kann das genannte Bereichsauswahlmodul den Auswertebereich beispielsweise an das Format eines zu bestrahlenden Gemäldes oder den zu beleuchtenden Zielbereich der OP-Leuchte anpassen.

Alternativ oder zusätzlich kann die Kamera aber auch mehrere Bilder in verschiedenen Auswertebereichen des Wandbilds erfassen, die dann von einer Bildverarbeitungseinrichtung zu einem Gesamt-Kamerabild zusammengesetzt werden können, das das Wandbild im gewünschten Umfang wiedergibt. Dabei kann das Wandbild der Leuchte durch Bewegen, bspw. Verdrehen, der Leuchte relativ zur Wand in einen festen Auswertebereich der Kamera hineinbewegt werde. Alternativ oder zusätzlich kann die Kamera relativ zur Wand bewegt, bspw. verkippt, werden, um verschiedene Auswertebereiche des Wandbilds in verschiedenen Bildern zu erfassen. Hierdurch können auch Leuchten vollständig erfaßt werden, die an sich "zu groß" auf die Wand strahlen.

Die Vorrichtung kann die bestimmte lichttechnische Charakteristik der Leuchte in verschiedener Weise ausgeben bzw. dem Anlagennutzer zur Kenntnis bringen, beispielsweise durch Anzeige eines Informationsbildes, welches die lichttechnische Charakteristik wiedergibt.

Insbesondere kann in Weiterbildung der Erfindung eine Visualisierung der bestimmten lichttechnischen Charakteristik der Leuchte in das Wandbild auf der Wand eingeblendet werden, die von der Leuchte bei Vermessungs- bzw. Bestimmungsvorgang beleuchtet wird. Insbesondere kann eine bildgebende Beleuchtungseinrichtung vorgesehen sein, die in das Wandbild und/oder neben das Wandbild auf der von der Leuchte beleuchteten Wand Informationen in Abhängigkeit der zuvor bestimmten lichttechnischen Charakteristik einblendet.

Beispielsweise kann die bildgebende Beleuchtungseinrichtung in das Wandbild der Leuchte Isoluxen einblenden und/oder eine Lichtverteilungskurve LVK einblenden und/oder Beleuchtungsstärkebereiche markieren und/oder Spektralinformationen einblenden. Als Spektralinformationen können beispielsweise Farbtemperaturen bzw. Farborte in bestimmten Bildpunkten eingeblendet werden oder es kann eine Schnittansicht mit Bereichsdarstellungen bestimmter Farbtemperaturen und/oder zusätzlich eingeblendeten Erläuterungen der Farbtemperaturen vorgenommen werden. Es können auch Verteilungskurven der Spektralverteilung dargestellt werden.

Durch das Einblenden der lichttechnischen Charakteristik bzw. Informationen, welche die bestimmte lichttechnische Charakteristik wiedergeben, direkt in das von der Leuchte erzeugte Wandbild bzw. in dessen unmittelbarer Nachbarschaft macht es einem Nutzer der Anlage besonders einfach, die berechnete bzw. bestimmte lichttechnische Charakteristik einzuordnen und wahrzunehmen und ggf. zu vergleichen.

Vorteilhafterweise können von einer Referenzbildeinrichtung auch Wandbilder und/oder Informationen von lichttechnischen Charakteristika von Referenzleuchten bereitgestellt werden, die beispielsweise in das Wandbild der zu untersuchenden Leuchte oder daneben eingeblendet werden können, um die zu untersuchende Leuchte mit den Eigenschaften einer Referenzleuchte vergleichen zu können.

Vorteilhafterweise kann die Referenzbildeinrichtung das Referenzwandbild bzw. die Referenzinformationen auch ohne physisches Vorhandensein der Referenzleuchte bereitstellen, beispielsweise über die schon genannte bildgebende Beleuchtungseinrichtung auf die Wand projizieren, und zwar unter Verwendung von lichttechnischen Charakteristika, die über eine Schnittstelle der Referenzbildeinrichtung bereitgestellt werden können. Beispielsweise kann sich die Referenzbildeinrichtung die lichttechnischen Charakteristika wie Lichtstärkeverteilungskurve oder Spektralverteilung einer Referenzleuchte aus dem Internet herunterladen oder durch manuelle Eingabe an eine Eingabeeinrichtung beschaffen, um dann aus den eingespielten bzw. eingegebenen lichttechnischen Charakteristika der Referenzleuchte ein entsprechendes Referenzbild zu erzeugen, das auf die Wand projiziert werden kann oder auch auf einer Anzeigevorrichtung angezeigt werden kann.

Vorteilhafterweise ist die genannte Referenzbildeinrichtung dabei dazu ausgebildet, die Verzerrung zu berücksichtigen, die die Kamera und/oder die bildgebende Beleuchtungseinrichtung zeigen bzw. sich aus dem Aufstellort, d.h. den Koordinaten der Kamera relativ zum Wandbild und/oder den Koordinaten der bildgebenden Beleuchtungseinrichtung relativ zum Wandbild beeinflusst sind. Durch Berücksichtigung der Verzerrungseffekte der Kamera und/oder der bildgebenden Beleuchtungseinrichtung können das Referenzbild und/oder die Referenzinformationen zur Referenzleuchte sozusagen passgenau bzw. tatsächlich vergleichbar mit dem Bild und/oder den Informationen zur zu untersuchenden Leuchte bereitgestellt werden, ohne unterschiedliche Verzerrungseffekte zu haben.

Insbesondere kann die Referenzbildeinrichtung ein Ansteuermodul umfassen, welches auf Basis der lichttechnischen Charakteristika der Referenzleuchte wie beispielsweise Lichtstärkeverteilung oder Spektralverteilung, die bildgebende Beleuchtungsvorrichtung und/oder eine Anzeigevorrichtung ansteuert und dabei die Verzerrungseffekte der Kamera und/oder der bildgebenden Beleuchtungseinrichtung berücksichtigt.

Die genannte bildgebende Beleuchtungseinrichtung kann beispielsweise ein Beamer sein, der die lichttechnische Information auf die Wand projiziert.

Alternativ oder zusätzlich kann jedoch auch eine Anzeigevorrichtung mit einem Bildschirm vorgesehen sein, auf dem einerseits das Kamerabild und/oder das entzerrte Kamerabild dargestellt wird und zusätzlich Informationen angezeigt werden, die die zuvor bestimmte lichttechnische Charakteristik wiedergeben bzw. in Abhängigkeit hiervon bestimmt wurden. Insbesondere kann die genannte Anzeigevorrichtung ein Einblendemodul umfassen, welches die in Abhängigkeit der zuvor bestimmten lichttechnischen Charakteristik bestimmte Information in das Kamerabild bzw. das entzerrte Kamerabild einblendet, das auf dem Bildschirm wiedergegeben wird. Dies können ähnlich wie bei der zuvor genannten Einblendung in das Wandbild lichttechnische Informationen wie Isoluxen, Lichtverteilungskurven LVK, RGBs, Beleuchtungsstärkebereiche und deren Markierungen oder Spektralinformationen sein.

Die Erfindung wird nachfolgend anhand eines bevorzugten Ausführungsbeispiels und zugehörigen Zeichnungen näher erläutert. In den Zeichnungen zeigen:
- Fig. 1:: eine Darstellung einer Vorrichtung zum Bestimmen und Visualisieren der lichttechnischen Charakteristik einer Leuchte gemäß einer vorteilhaften Ausführung der Erfindung, die die Komponenten der Vorrichtung und deren Vernetzung miteinander zeigt,
- Fig. 2:: eine perspektivische Ansicht der Anordnung der Vorrichtung vor einer Wand, auf der die Leuchte ein Wandbild erzeugt,
- Fig. 3:: eine perspektivische Darstellung der Anordnung der zu vermessenden Leuchte relativ zur Wand, wobei die Teilansicht (a) eine fix montierte Leuchte und die Teilansicht (b) eine händisch gehaltene Leuchte während eines Vermessungsvorgangs zeigt,

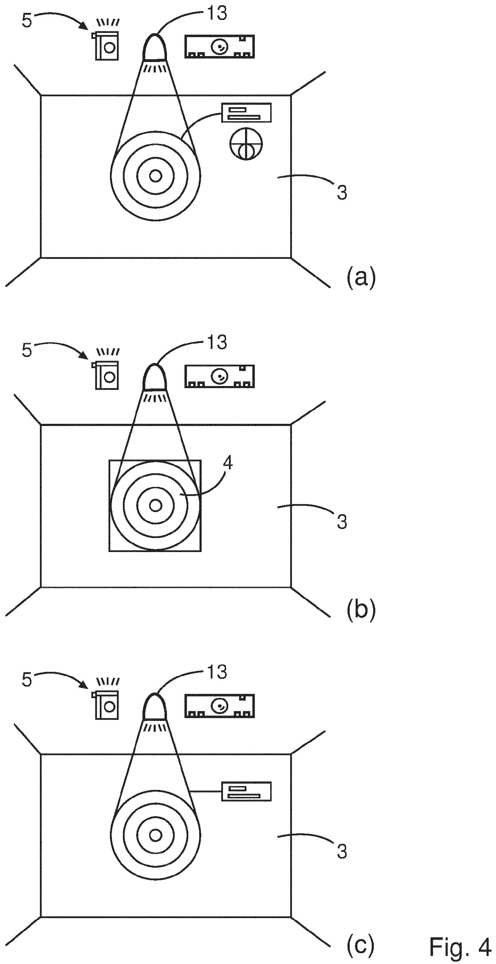

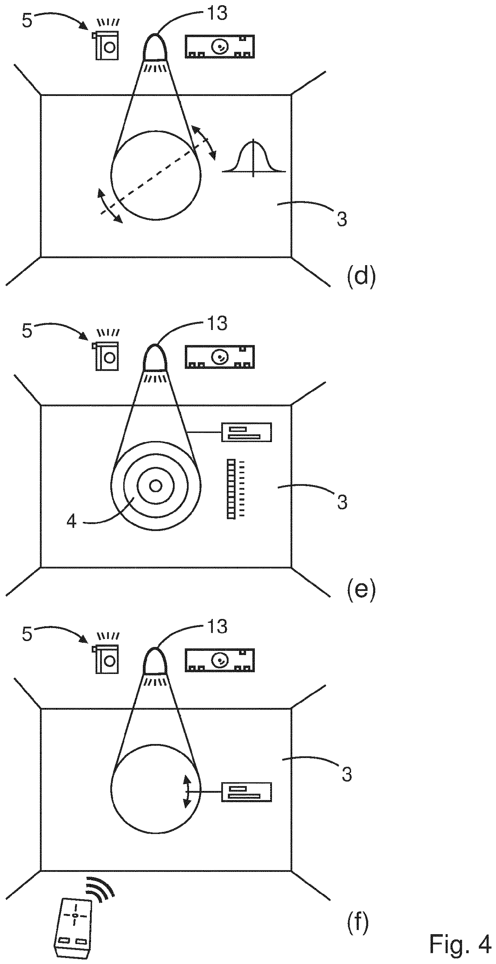

- Fig. 4:: eine perspektivische Darstellung der Vorrichtung und des von der Leuchte auf der Wand erzeugten Wandbilds, wobei die verschiedenen Teilansichten (a) bis (f) die Visualisierung verschiedener lichttechnischer Charakteristika durch Einblendung in bzw. an dem Wandbild zeigen, und
- Fig. 5:: eine perspektivische Darstellung der Visualisierung verschiedener Lichtszenarien gemäß den Teilansichten (a) und (b) als Wandbild und die Projektion eines schachbrettartigen Konturen- bzw. Hell-Dunkel-Musters auf der Wand gemäß Teilansicht (c) für die Kalibrierung der Entzerrung des Kamerabilds und der Kalibrierung der Beleuchtungsstärkemessung.

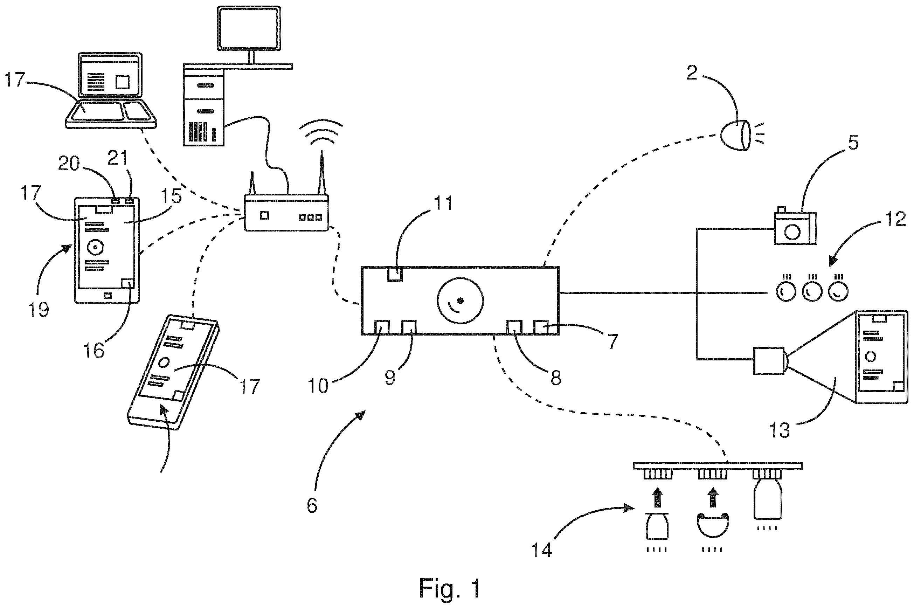

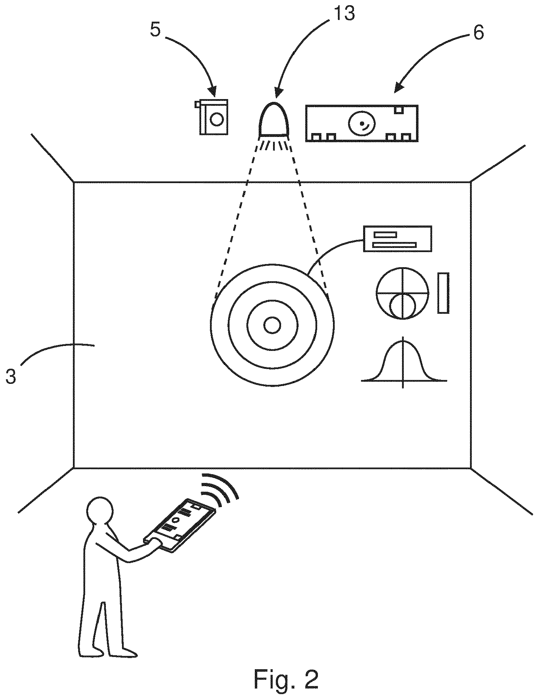

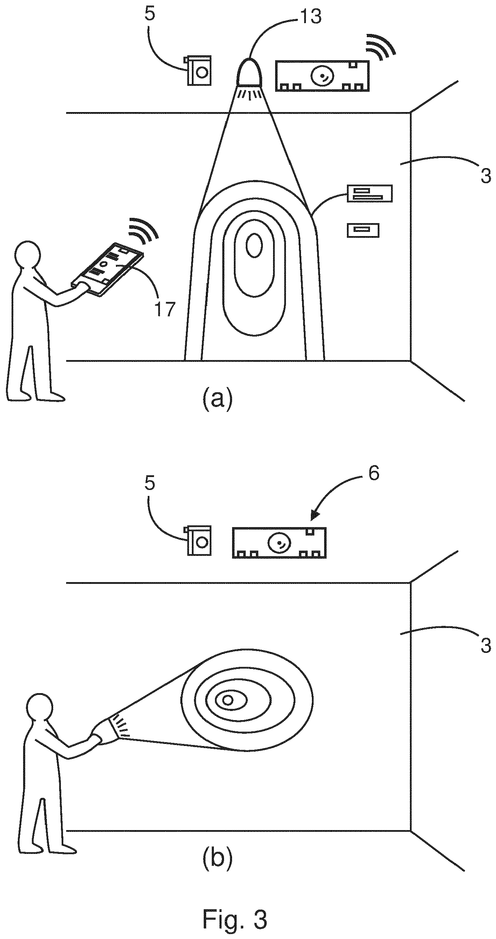

Wie die Figuren 1-3 zeigen, kann eine oder mehrere Leuchten 2 zum Erzeugen eines oder mehrerer Wandbilder 4 auf einer Wand 3 an einer an die Einbauumgebung angepassten Montageposition montiert werden, beispielsweise an einer Decke, wobei die Leuchte 2 aber auch per Hand vor der Wand positioniert werden kann, um das genannte Wandbild 4 zu bestrahlen, vgl. Fig. 3 Teilansicht (b).

Die genannte Wand 3 kann beispielsweise eine Gebäude- bzw. Zimmerwand sein, aber auch eine Projektionsfläche wie beispielsweise eine Leinwand oder Kinoleinwand umfassen, wobei die Leuchte 2 in einem bestimmungsgemäßen Positionsbereich relativ zur Wand 3 montiert sein kann, so wie dies auch im Betriebszustand der Leuchte 2 der Fall sein kann. Beispielsweise kann die Leuchte 2 in einem Bereich von 0,5 bis 5 m oder beispielsweise 2 bis 3 m von der Wand 3 entfernt montiert sein.

Das von der Leuchte 2 auf der Wand 3 erzeugte Wandbild 4 wird mittels einer Kamera 5 erfasst, die beispielsweise eine Digitalkamera sein kann, die ein Kamerabild in Form einer Vielzahl von Pixel bereitstellen kann. Die Kamera 5 kann vorteilhafterweise in der Nähe der Leuchte 2 positioniert werden, beispielsweise ebenfalls an der Decke montiert werden, an der auch die Leuchte 2 montiert ist, wobei aber auch andere Befestigungsvarianten wie ein Stativ oder andere Halteeinrichtungen vorgesehen sein können.

Die Kamera 5 wird dabei so ausgerichtet, dass sie das von der Leuchte 2 auf der Wand 3 beleuchtete Wandbild 4 erfasst.

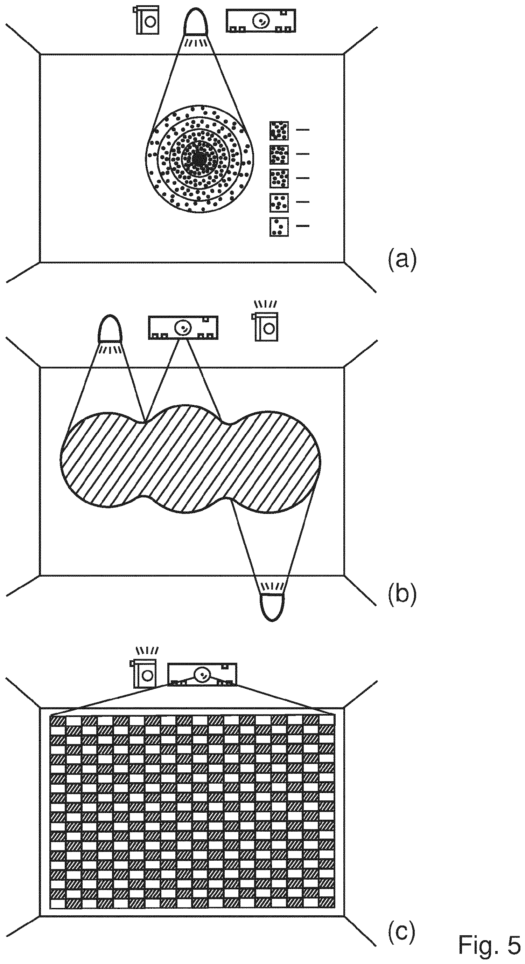

Dabei wird zunächst ein Auswertebereich 18 für das auszuwertende Kamerabild definiert, insbesondere in Form eines Rechtecks, welches beispielsweise von der bestrahlten Wand definiert oder auch ein Teilbereich hiervon sein kann, vgl. Fig. 5b. Dieser Auswertebereich 18 wird unabhängig vom konkreten Lichtbild auf der Wand definiert und kann vom Benutzer mittels eines Bereichswahlmoduls 14 variabel vorgegeben werden, wobei vorzugsweise ein mehr oder minder wandgroßer Rechteckrahmen definiert wird. In diesem vorbestimmten Auswertebereich 18 wird dann das Kamerabild, das vorzugsweise den gesamten Auswertebereich wiedergeben kann, ausgewertet.

Generell kann das genannte Bereichswahlmodul 14 den Auswertebereich 18 variabel vorgeben, vorzugsweise hinsichtlich der Fläche bzw. Größe und/oder hinsichtlich des Formats, beispielsweise in Form eines hochformatigen Rechtecks oder eines querformatigen Rechtecks oder eines Quadrats. Soll beispielsweise ein Museumsstrahler oder eine OP-Leuchte hinsichtlich ihrer lichttechnischen Charakteristik vermessen bzw. bestimmt werden, kann das genannte Bereichsauswahlmodul 14 den Auswertebereich 18 beispielsweise an das Format eines zu bestrahlenden Gemäldes oder den zu beleuchtenden Zielbereich der OP-Leuchte anpassen.

Das Kamerabild der Kamera 5 wird einer Bildauswerteeinrichtung 6 bereitgestellt, die in verschiedenen Schritten das Kamerabild manipuliert und auswertet, insbesondere entzerrt und auswertet.

Die Bildauswerteeinrichtung 6 kann von einem Rechner oder einem Server gebildet sein, insbesondere zumindest teilweise in Form eines oder mehrerer Softwarebausteine realisiert sein, die in einer Datenverarbeitungseinrichtung umfassend einen Mikroprozessor und einen Programmspeicher abgearbeitet werden können, beispielsweise in Form des in den Zeichnungen dargestellten Servers.

Der genannten Bildauswerteeinrichtung 6 in Form des Servers oder einer anderen geeigneten Rechnereinrichtung werden ferner Daten bzw. Signale eines oder mehrerer Sensoren 12 zugeführt, die insbesondere einen oder mehrere Beleuchtungsstärke- und/oder Farbwertsensoren erfassen können, die tatsächliche Beleuchtungsstärken und/oder Farbwerte in Bildpunkten und/oder -bereichen des Wandbilds 4 umfassen können, um eine Kalibrierung ausführen zu können.

Alternativ oder zusätzlich können die genannten Sensoren 12 auch einen oder mehrere Positionssensoren umfassen, beispielsweise Abstands- und/oder Lagesensoren, mit Hilfe derer die Position der Leuchte 2 relativ zur Wand 3 sensorisch bestimmt werden können. Insbesondere können die genannten Sensoren den Abstand der Leuchte 2 von der Wand 3 und deren Querversatz im Sinne eines Horizontal- und/oder Vertikalversatzes gegenüber einem Zentrum des Wandbilds 4 bestimmen.

Eine Eingabeeinrichtung 17, die beispielsweise ein an den Server angeschlossenes Tablet umfassen kann und/oder Bedientasten oder -regler an einer Steuereinrichtung umfassen kann, können verschiedene Setup-Einstellungen vorgenommen werden.

Insbesondere kann zunächst ein Auswertebereich 18 im Zielgebiet des Lichtkegels der Leuchte 2, insbesondere auf der Wand 3 mittels der genannten Eingabeinrichtung 17 festgelegt werden, in dem die Bildauswerteeinrichtung 6 das Kamerabild der Kamera 5 auswertet. Der genannte Auswertebereich 18 kann variabel festgelegt werden, vorzugsweise innerhalb von vernünftigen Grenzen, die einerseits an den von der Leuchte 2 beleuchteten Bereich bzw. an das Wandbild 4 angepasst sind und zum anderen von der Kamera 5 vollständig erfasst werden können.

Beispielsweise kann der Auswertebereich 18 durch Antippen von Eckpunkten auf dem dargestellten Tablet, auf dem ein Kamerabild der Wand 3 angezeigt werden kann, definiert werden.

Ist der Auswertebereich 18 definiert, kann die Bildauswerteeinrichtung 6 das von der Kamera 5 bereitgestellte Bild auswerten, um die interessierenden lichttechnischen Charakteristika zu bestimmen.

Dabei kann zunächst aus dem von der Kamera 5 bereitgestellten Kamerabild, das das von der Leuchte 2 erzeugte Wandbild auf der Wand 3 wiedergibt, von einem Entzerrungsmodul 7 ein entzerrtes Kamerabild berechnet.

Durch die Entzerrung des Kamerabilds können Verzerrungseffekte, die vom Objektiv der Kamera herrühren können oder auch eine Krümmung der Wand 3 bedingt sein können, korrigiert werden, wodurch es grundsätzlich möglich ist, die Leuchte 2 in verschiedenen Positionen auf die jeweilige Einbauumgebung abgestimmt zu montieren und dennoch eine korrekte Bestimmung der lichttechnischen Charakteristik zu erhalten.

Um solche Verzerrungseffekte zu korrigieren, kann das Entzerrungsmodul 7 eine Identifiziereinrichtung zum Identifizieren von Schlüsselkonturen im Kamerabild aufweisen, die im Wandbild 4, welches von der Kamera 5 aufgenommen wird, gerade Konturen und/oder rechte Winkel sein können. Mithilfe eines Berechnungsmoduls kann die Krümmungs- und/oder Winkelabweichung zwischen der im Kamerabild identifizierten Schlüsselkontur und der im Wandbild tatsächlich vorhandenen, insbesondere geraden oder rechtwinkligen Schlüsselkontur bestimmt werden, um dann auf Basis der bestimmten Krümmungs- und/oder Winkelabweichung ein entzerrtes Kamerabild bereitzustellen, welches sozusagen ein manipuliertes Kamerabild oder virtuelles Bild ist, das zwar auf dem von der Kamera geschossenen Kamerabild beruht, jedoch die dabei aufgetretenen, verkrümmten und/oder im Winkel verzogenen Konturen wieder zurechtzieht.

Als Schlüsselkontur kann dabei beispielsweise auf der Wand 3 eine Markierung mit vorbestimmtem Konturverlauf, beispielsweise eine oder mehrere horizontale Linien und/oder eine oder mehrere vertikale Linien vorgegeben werden. Dies kann beispielsweise durch eine tatsächlich aufgebrachte Markierung auf der Wand erfolgen, oder auch durch eine bildgebende Optik 13 auf die Wand 3 projiziert werden, beispielsweise in Form eines Gittermusters oder eines Schachbrettmusters, vgl. Fig. 5 (c).

Dabei kann die bildgebende Apparatur 13 beispielsweise einen Beamer in der Nähe bzw. der unmittelbaren Nachbarschaft der Leuchte 2 und/oder der Kamera 5 aufweisen. In dem von der Kamera 5 aufgenommenen Kamerabild werden die genannten Markierungen im Wandbild wie die Schachbrettfelder beispielsweise mittels einer Konturerkennungseinrichtung erkannt und identifiziert, woraufhin dann der Konturverlauf im Kamerabild mit dem bekannten Konturverlauf der Markierung auf der Wand 3 abgeglichen werden kann, um dann auf Basis der berechneten Kontur- und/oder Winkelabweichungen das Kamerabild zu manipulieren und hierdurch zu entzerren.

Das entzerrte Kamerabild wird sodann hinsichtlich der im entzerrten Bild auftretenden Beleuchtungsstärken ausgewertet, wobei hier zunächst relative Luxzahlen bestimmt werden können. Genauer gesagt kann bestimmt werden, in welchen Bereichen wie viele Lux mehr oder weniger als in anderen Bereichen auftreten, wobei hier zunächst noch keine absoluten Luxzahlen bestimmt werden.

Insbesondere kann ein Beleuchtungsstärke- und/oder Farb- und/oder Spektralverteilungsmodul 8 eine Vergleichseinrichtung 10 zum Vergleichen der Beleuchtungsstärken und/oder Farborte und/oder der Leuchtspektren in verschiedenen Bildpunkten und/oder -bereichen des entzerrten Kamerabilds relativ zueinander aufweisen, um im entzerrten Kamerabild eine relative Beleuchtungsstärke- und/oder Farb- und/oder Spektralverteilung zu bestimmen.

Um zu absoluten Beleuchtungsstärken und einer absoluten Beleuchtungsstärke- und/oder Farb- und/oder Spektralverteilung zu kommen, kann das Beleuchtungsstärke- und/oder Farb- und/oder Spektralverteilungsmodul 8 zusätzlich zu der genannten Vergleichseinrichtung 10 eine Kalibriereinrichtung 11 umfassen, mittels derer aus den zuvor bestimmten relativen Luxzahlen bzw. relativen Beleuchtungsstärkewerten und/oder relativen Farbwerten und/oder relativen Leuchtspektren, die die Vergleichseinrichtung bereitgestellt hat, die Beleuchtungsstärke- und/oder Farb- und/oder Spektralverteilung mit absoluten Beleuchtungsstärke-, Farb- und/oder Spektralwerten zu bestimmen.

Die Kalibriereinrichtung 11 kann einen oder mehrere Beleuchtungsstärke- und/oder Farbwertsensoren 12 zum Messen der tatsächlichen Beleuchtungsstärke in einem oder mehreren Bildpunkten und/oder -bereichen umfassen, wobei der genannte Beleuchtungsstärke- und/oder Farbwertsensor 12 beispielsweise unmittelbar an der Wand 3 angebracht oder auf die Wand 3 gerichtet sein kann, auf der das Wandbild 4 erzeugt wird. Ist in einem oder mehreren Bildpunkten bzw. -bereichen die tatsächliche Beleuchtungsstärke durch sensorische Erfassung bekannt, kann ein Kalibrierfaktor bzw. Beleuchtungsstärke-Korrekturfaktor bestimmt werden, mithilfe dessen dann die relativen Beleuchtungsstärken in tatsächliche, absolute Beleuchtungsstärkewerte umgerechnet werden können.

Zur Farb- und/oder Spektralkalibrierung kann die genannte Kalibriereinrichtung 11 aber auch einen oder mehrere RGB-Sensoren bzw. Farbwertsensoren aufweisen, um tatsächliche Farbwerte in einem oder mehreren Bildpunkten und/oder-bereichen messen zu können, wobei ein solcher Farbwertsensor beispielsweise unmittelbar an der Wand angebracht oder auf die Wand 3 gerichtet sein kann, auf welcher das Wandbild 4 erzeugt wird. Ist in einem oder mehreren Bildpunkten bzw. -bereichen der tatsächliche Farbwert durch sensorische Erfassung bekannt, kann ein Kalibrierfaktor bestimmt werden, mit Hilfe dessen dann die relativen Farbwerte bspw. in Form der RGB-Signale der Kamera in tatsächliche, absolute Farbwerte bspw. in Form "korrekter" Farbtemperaturen oder Farborte umgerechnet werden können.

Alternativ oder zusätzlich zu einem solchen Farbwertsensor kann die Kalibriereinrichtung 11 aber auch auf eine Hyperspektralkamera zurückgreifen, mit Hilfe derer eine Spektralmessung pixel- oder zeilenweise vorgenommen werden kann. Eine solche Hyperspektralkamera kann beispielsweise auf die Wand 3 gerichtet sein, auf der das Wandbild 4 erzeugt wird, oder in den von der zu vermessenden Leuchte abgegebenen Lichtkegel blicken. Die Verwendung einer solchen Hyperspektralkamera erlaubt pixelweise spektrale Auswertungen in verschiedene Bildpunkten und/oder eine Betrachtung der Verteilung.

Alternativ oder zusätzlich kann die Kalibriereinrichtung auch eine bildgebende Beleuchtungseinrichtung 13 zum Beleuchten der Wand mit einem vorbestimmten Hell-Dunkel-Muster, insbesondere einem vorbestimmten Schwarz-Weiß-Muster wie beispielsweise einem Schachbrett aufweisen, vgl. Figur 5 (c), wobei die Vergleichseinrichtung des Beleuchtungsstärke- und/oder Farb- und/oder Spektralverteilungsmoduls 8 in einem Kalibriervorgang die relativen Beleuchtungsstärkewerte für helle und dunkle Bildpunkte und/oder -bereiche des genannten, vorbestimmten Hell-Dunkel-Musters bestimmen kann. Aus der Kenntnis der beispielsweise schwarzen und weißen Felder im Wandbild des Kalibrierdurchlaufs kann dann wiederum ein Kalibrierfaktor bzw. Beleuchtungsstärkenumrechnungsfaktor bestimmt werden, mithilfe dessen dann das Beleuchtungsstärke- und/oder Farb- und/oder Spektralverteilungsmodul 8 aus den relativen Beleuchtungsstärkewerten im entzerrten Kamerabild absolute Beleuchtungsstärkewerte bestimmen kann.

Ist die Beleuchtungsstärke- und/oder Farb- und/oder Spektralverteilung für das entzerrte Kamerabild bestimmt, kann ein Lichtstärke- und/oder Farbort- und/oder Strahlstärkeverteilungsmodul 9 hieraus die Lichtstärkeverteilung und/oder die winkelabhängige Farbort-Verteilung und/oder die spektrale Strahlstärkeverteilung der Leuchte 2 bestimmen, wobei das genannte Lichtstärke- und/oder Farbort- und/oder Strahlstärkeverteilungsmodul 9 insbesondere die Position der Leuchte 2 relativ zur Wand 3 und/oder die Geometrie des von der Leuchte 2 beleuchteten Wandflächenabschnitts und dessen geometrische Beziehung zur Leuchte 2 berücksichtigen kann.

Die Position und/oder geometrische Beziehung der Leuchte 2 relativ zur Wand 3 bzw. zum Wandbild 4 kann beispielsweise über eine geeignete Eingabeschnittstelle 13 der Vorrichtung manuell eingegeben werden und/oder von einer automatischen Positionsbestimmungseinrichtung erfasst und dem Lichtstärke- und/oder Farbort- und/oder Strahlstärkeverteilungsmodul 11 über die genannte Eingabeschnittstelle bereitgestellt werden, beispielsweise in Form eines Koordinaten-Datensatzes, der die Position der Leuchte 2 relativ zu dem Wandabschnitt angibt, den die Kamera 5 als Kamerabild erfasst.

Die genannten Positionsdaten können dabei insbesondere den Abstand der Leuchte 2 von der Wand 3 und/oder einen Querversatz der Leuchte 2 relativ zu dem Zentrum bzw. der Mitte zwischen zweier Wandbild 4, welche erfasst werden, oder eines vorbestimmten Wandbildpunktes wie beispielsweise zweier gegenüberliegender Ecken, umfassen. Beispielsweise kann der Positionsdatensatz den Abstand der Leuchte 2 senkrecht zur Wand 3 und den Höhen- und Horizontalversatz der Leuchte 2 gegenüber dem Zentrum des von der Leuchte 2 erzeugten bzw. von der Kamera 5 erfassten Wandbilds 4 beinhalten.

Die genannten Positionsdaten können dabei sensorisch erfasst werden, beispielsweise durch Abstands- und/oder Lagesensoren 12.

Wie Fig. 5, dort insbesondere die linke und mittlere Darstellung gemäß den Teilansichten (a) und (b) zeigt, kann von einer Referenzbildeinrichtung 20 auch ein Referenzbild einer Referenzleuchte erzeugt werden, welches beispielsweise von der genannten bildgebenden Beleuchtungseinrichtung 13 auf die Wand 3 projiziert werden kann. Ein solches Referenzbild kann beispielsweise die Intensitätsverteilung und/oder Farbverteilung oder die Spektralverteilung der Referenzleuchte beinhalten und im Vergleich zur entsprechenden Farbverteilung bzw. Spektralverteilung der zu untersuchenden Leuchte zeigen. Beispielsweise kann die Einblende- und/oder Referenzbildeinrichtung aber auch Beleuchtungsstärkeverteilungen der zu untersuchenden Leuchte und/oder einer Referenzleuchte in Falschfarben darstellen. Ähnlich einer Topografiekarte können Beleuchtungsstärken bzw. Intensitäten in jeweils anderen "Falsch"-Farben dargestellt werden, um die genannten Größen einfach erfassbar zu visualisieren.

Dabei kann durch eine vergleichsweise Darstellung der zu untersuchenden Leuchte mit einer Referenzleuchte, beispielsweise durch die Darstellung von Lichtverteilungen, vgl. Fig. 5 (a), (b), die lichttechnische Charakteristik bzw. deren Unterschiede zu einer oder mehreren Vergleichsleuchten sichtbar und leicht verständlich gemacht werden.

Vorteilhafterweise können verschiedene Gegenüberstellungen eingestellt werden, die von der Referenzbildeinrichtung 20 eingeblendet werden können, so z.B. die reale Leuchte vs. Simulationsdaten, und/oder die reale Leuchte vs. die reale Leuchte in einem anderen Entwicklungsstand oder in einer andern Ausführungsvariante, und/oder die reale Leuchte vs. ein Referenzprodukt bspw. mit Lichtcharakteristika aus Onlinekatalog, und/oder die reale Leuchte in Falschfarben, und/oder eine Überlagerung der charakterisierten Leuchte.

Weitere Gegenüberstellungen können aus den Darstellungsarten ausgewählt werden.

## Patentansprüche

1. Vorrichtung zum Bestimmen der lichttechnischen Charakteristik einer Leuchte (2), mit einer Kamera (5) zum Erfassen eines von der Leuchte (2) erzeugten Wandbilds (4) auf einer Wand (3) und Bereitstellen eines auf dem erfassten Wandbild (4) beruhenden Kamerabilds, und einer Bildauswerteeinrichtung (6) zum Auswerten des Kamerabilds, **dadurch gekennzeichnet, dass** die Bildauswerteeinrichtung (6)
- ein Entzerrungsmodul (7) zum Entzerren des Kamerabilds,
- ein Beleuchtungsstärke- und/oder Farbverteilungs- und/oder Spektralverteilungsmodul (8) zum Bestimmen einer Beleuchtungsstärke- und/oder Farb- und/oder Spektralverteilung in dem entzerrten Kamerabild, und
- ein Lichtstärke- und/oder Farbort- und/oder Strahlstärkeverteilungsmodul (9) zum Bestimmen der Lichtstärkeverteilung und/oder der winkelabhängigen Farbortverteilung und/oder der spektralen Strahlstärkeverteilung der Leuchte (2) aus der zuvor im entzerrten Kamerabild bestimmten Beleuchtungsstärke- und/oder Farb- und/oder Spektralverteilung
aufweist.

2. Vorrichtung nach dem vorhergehenden Anspruch, wobei das Beleuchtungsstärke- und/oder Farbverteilungs- und/oder Spektralverteilungsmodul (8) eine Vergleichseinrichtung (10) zum Vergleichen der Beleuchtungsstärken und/oder Farbwerte und/oder Spektralverteilungen in verschiedenen Bildpunkten und/oder -bereichen des entzerrten Kamerabilds relativ zueinander, sowie eine Kalibriereinrichtung (11) zum Bestimmen der Beleuchtungsstärke- und/oder Farb- und/oder Spektralverteilung umfassend absolute Beleuchtungsstärken und/oder Farbwerte und/oder Spektralverteilungen aus den zuvor bestimmten relativen Beleuchtungsstärken und/oder Farbwerten und/oder Spektralverteilungen der Vergleichseinrichtung (10) umfasst.

3. Vorrichtung nach dem vorhergehenden Anspruch, wobei die Kalibriereinrichtung (11) einen Beleuchtungsstärke- und/oder Farbwertsensor (12) zum Messen der Beleuchtungsstärke und/oder des Farbwerts in einem Bildpunkt und/oder -bereich umfasst.

4. Vorrichtung nach einem der beiden vorhergehenden Ansprüche, wobei die Kalibriereinrichtung (11) eine Hyperspektralkamera mit einer Sensormatrix zum pixelweisen Erfassen der Farb- und/oder Spektralverteilung aufweist.

5. Vorrichtung nach einem der drei vorhergehenden Ansprüche, wobei die Kalibriereinrichtung (11) eine bildgebende Beleuchtungseinrichtung (13) zum Beleuchten der Wand (3) mit einem vorbestimmen Hell-Dunkel-Muster, insbesondere Schwarz-Weiß-Muster wie Schachbrett, und/oder mit einem vorbestimmten Farbmuster aufweist, wobei die Vergleichseinrichtung (10) dazu ausgebildet ist, in einem Kalibriervorgang die relativen Beleuchtungsstärkewerte für helle und dunkle Bildpunkte und/oder -bereiche des Hell-Dunkel-Musters und/oder die relativen Farbwerte für verschiedenfarbige Bildpunkte und/oder -bereiche des Farbmusters zu bestimmen.

6. Vorrichtung nach einem der vorhergehenden Ansprüche, wobei das Entzerrungsmodul (7) eine Identifiziereinrichtung zum Identifizieren von Schlüsselkonturen, die im Wandbild gerade Konturen und/oder rechte Winkel sind, im Kamerabild sowie ein Berechnungsmodul zum Berechnen und Bereitstellen des entzerrten Kamerabilds auf Basis einer bestimmten Krümmungs- und/oder Winkelabweichung zwischen der im Kamerabild identifizieren Schlüsselkontur und der im Wandbild vorhandenen Schlüsselkontur.

7. Vorrichtung nach dem vorhergehenden Anspruch, wobei das Entzerrungsmodul (7) eine/die bildgebende Beleuchtungseinrichtung (13) zum Beleuchten der Wand (3) mit einem vorbestimmten Konturmuster, insbesondere einem Schachbrettmuster, umfasst.

8. Vorrichtung nach einem der beiden vorhergehenden Ansprüche, wobei das Entzerrungsmodul (7) ein Berechnungsmodul zum Berechnen und Bereitstellen eines entzerrten Hell-Dunkel- und/oder Farbmusters durch die bildgebende Beleuchtungseinrichtung (13) auf Basis einer bestimmten Krümmungs- und/oder Winkelabweichung zwischen der im Kamerabild identifizierten Schlüsselkontur und der im Wandbild vorhandenen Schlüsselkontur aufweist, wobei das Entzerrungsmodul (7) vorzugsweise eine kalibrierte Kamera (5) zum Bereitstellen eines kalibrierten Kamerabilds der identifizierten Schlüsselkontur aufweist.

9. Vorrichtung nach einem der vorhergehenden Ansprüche, wobei das Entzerrungsmodul (7) eine Stereokamera und/oder zwei voneinander beabstandete Kameras aufweist und dazu ausgebildet ist, aus den Koordinaten der Kameraanordnung und der Koordinaten der Anordnung der bildgebenden Beleuchtungseinrichtung (13) anhand eines Abgleichs der versetzten Kamerabilder die Kamera (5) und die bildgebende Beleuchtungseinrichtung (13) zu kalibrieren.

10. Vorrichtung nach einem der vorhergehenden Ansprüche, wobei die Bildauswerteeinrichtung (6) ein Bereichswahlmodul (14) zum Vorgeben eines Auswertebereichs des Wandbilds (4) für das auszuwertende Kamerabild and/or , wobei eine Bildverarbeitungseinrichtung zum Zusammensetzen des Kamerabilds aus zwei oder mehreren Kamerabildern, die Teile des Wandbilds (4) in zwei oder mehreren, voneinander abweichenden Auswertebereichen wiedergeben, vorgesehen ist.

11. Vorrichtung nach einem der vorhergehenden Ansprüche, wobei die Bildauswerteeinrichtung (6) eine Eingabeschnittstelle zum Eingeben der Position der Leuchte (2) relativ zur Wand (3) aufweist und/oder eine automatische Positionsbestimmungseinrichtung zum Erfassen der Position der Leuchte (2) relativ zur Wand (3) vorgesehen ist, wobei das Lichtstärke- und/oder Farbort- und/oder Strahlstärkeverteilungsmodul (9) dazu ausgebildet ist, die Lichtstärke- und/oder winkelabhängige Farbort- und/oder spektrale Strahlstärkeverteilung der Leuchte (2) auf Basis der eingegebenen und/oder automatisch erfassten Position der Leuchte (2) relativ zur Wand (3) und aus der Beleuchtungsstärke- und/oder Farb- und/oder Spektralverteilung zu berechnen, wobei die Positionsbestimmungseinrichtung dazu ausgebildet ist, den Abstand der Leuchte (2) von der Wand (3) und den Querversatz der Leuchte (2) vom Zentrum des Auswertebereichs des Wandbilds (4) zu bestimmen.

12. Verfahren zum Bestimmen der lichttechnischen Charakteristik einer Leuchte (2), mit folgenden Schritten:
- Erfassen eines von der Leuchte (2) auf einer Wand (3) erzeugten Wandbilds (4) mittels einer Kamera (5) und Bereitstellen eines auf dem erfassten Wandbild basierenden Kamerabilds, und
- Auswerten des Kamerabilds zum Bestimmen der lichttechnischen Charakteristik der Leuchte,
**dadurch gekennzeichnet, dass**
aus dem von der Kamera (5) bereitgestellten Kamerabild von einem Entzerrungsmodul (7) ein entzerrtes Kamerabild berechnet wird, sodann relative Beleuchtungsstärken und/oder Farbwerte und/oder Spektralverteilungen in verschiedenen Bildpunkten und/oder -bereichen des entzerrten Kamerabilds relativ zueinander von einem Beleuchtungsstärke- und/oder Farbverteilungs- und/oder Spektralverteilungsmodul (8) berechnet werden und mittels einer Kalibriereinrichtung (11) aus den relativen Beleuchtungsstärkewerten und/oder Farbwerten und/oder Spektralverteilungen eine Beleuchtungsstärke- und/oder Farb- und/oder Spektralverteilung bereitgestellt wird, und aus der Beleuchtungsstärke- und/oder Farb- und/oder Spektralverteilung anhand einer eingegebenen und/oder automatisch bestimmten Position der Leuchte (2) relativ zur Wand (3) von einem Lichtstärke- und/oder Farbort- und/oder Strahlstärkeverteilungsmodul (9) die Lichtstärke- und/oder winkelabhängige Farbort- und/oder spektrale Strahlstärkeverteilung der Leuchte (2) bestimmt wird.

13. Vorrichtung zur Visualisierung der lichttechnischen Charakteristik einer Leuchte (2), mit einer Vorrichtung zum Bestimmen der lichttechnischen Charakteristik der Leuchte, die gemäß einem der Ansprüche 1 bis 11 mit mindestens einer
a) bildgebenden Beleuchtungseinrichtung (13) zum Einblenden von Informationen in das Wandbild (4) und/oder neben das Wandbild (4) auf der Wand (3), in Abhängigkeit der zuvor bestimmten lichttechnischen Charakteristik, und.
b) einer Anzeigevorrichtung (15) umfassend einen Bildschirm zum Anzeigen des Kamerabilds und/oder des entzerrten Kamerabilds, wobei die Anzeigevorrichtung (15) ein Einblendemodul (16) zum Einblenden von Informationen auf dem Bildschirm in Abhängigkeit der aus dem Kamerabild zuvor bestimmten lichttechnischen Charakteristik aufweist ausgebildet ist.

14. Vorrichtung nach Anspruch 13, wobei Bildpunkt- und/oder -bereichs-Auswahlmittel (19) zum Auswählen eines interessierenden Bildpunkts und/oder -bereichs im Kamerabild und/oder im entzerrten Kamerabild vorgesehen sind, wobei die Bildauswerteeinrichtung (6) dazu ausgebildet ist, die lichttechnische Charakteristik für den ausgewählten Bildpunkt und/oder -bereich zu bestimmen, und wobei die bildgebende Beleuchtungseinrichtung (13) und/oder das Einblendemodul (16) der Anzeigevorrichtung (15) dazu ausgebildet sind, die für den ausgewählten Bildpunkt und/oder -bereich bestimmte lichttechnische Charakteristik in dem Bildpunkt und/oder -bereich des Wandbilds (4) und/oder des auf der Anzeigevorrichtung angezeigten Kamerabilds anzuzeigen, der dem ausgewählten Bildpunkt und/oder -bereich entspricht.

15. Vorrichtung nach einem der vorhergehenden Ansprüche, wobei eine Referenzbildeinrichtung (20) zum Einblenden von Informationen zu einer Referenzleuchte in das Wandbild (4) und/oder neben das Wandbild (4) auf der Wand (3) und/oder auf dem Bildschirm der Anzeigevorrichtung (15) in Abhängigkeit von einer lichttechnischen Charakteristik der Referenzleuchte vorgesehen ist, und wobei die Referenzbildeinrichtung (20) mindestens
a) ein Ansteuermodul (21) zum Ansteuern der bildgebenden Beleuchtungseinrichtung (13) und/oder der Anzeigevorrichtung (15) unter Berücksichtigung der vom Entzerrungsmodul (7) bestimmten Verzerrungseffekte der Kamera (5) und/oder der bildgebenden Beleuchtungseinrichtung (13), und
b) eine Datenschnittstelle zum Einspielen der Lichtstärke- und/oder winkelabhängigen Farbort- und/oder spektralen Strahlstärkeverteilung einer oder mehrerer Referenzleuchten aufweist, wobei ein/das Ansteuermodul (21) dazu ausgebildet ist, die bildgebende Beleuchtungseinrichtung (13) und/oder die Anzeigevorrichtung (15) anhand der eingespielten Lichtstärke- und/oder winkelabhängigen Farbort- und/oder spektralen Strahlstärkeverteilung der einen oder mehreren Referenzleuchten anzusteuern, aufweist.
